# DEMANDE DE BREVET EUROPEEN

(11) **EP 0 977 082 A1**
(43) Date de publication de la demande: **02.02.2000**
(21) Numéro de dépôt: 99490023.1
(22) Date de dépôt: 29.07.1999
(51) Int. Cl.: G03B 17/24

(54) **Appareil photographique à marquage incorpore**

(30) Priorité: 29.07.1998 FR 9809899
(71) Demandeur: Martin, René, 62200 St. Martin lez Boulogne (FR)
(72) Inventeur: Martin, René, 62200 St. Martin lez Boulogne (FR)
(74) Mandataire: Hénnion, Jean-Claude

(57) **Abrégé**

L'appareil photographique de l'invention comprend d'une part une chambre d'exposition (3) et une ouverture (4) pour l'objectif (5) devant lequel une pellicule photographique peut être déplacée, et d'autre part une bande d'un film transparent porteur d'une ou plusieurs images déterminées et présentant un effet filtre. Ladite bande est fixée à l'intérieur de la chambre (3) en sorte d'être face à l'objectif (5) et en contact avec la pellicule (6) ; il s'agit d'un tronçon (18) d'un film photographique, du type diapositive, sur lequel la ou lesdites images (11') ont été impressionnées lors d'une prise de vue alors qu'elles étaient sur un fond blanc, notamment une surface neutre blanche. S'agissant d'un appareil jetable, la prise de vue est avec sous-exposition. S'agissant d'un appareil non jetable, la prise de vue est sous lumière artificielle, en exposition moyenne, avec une vitesse d'obturation qui diffère selon les couleurs utilisées pour l'image, franches ou pastels.

## Description

La présente invention concerne un appareil photographique qui comporte des moyens aptes à réaliser un marquage, par une ou plusieurs images prédéterminées, sur les photographies après développement.

D'une manière générale, les moyens de marquage utilisés dépendent de l'information que l'on cherche à apporter sur la photographie développée. Par exemple, s'il s'agit que soient indiquées la date et l'heure de la prise de vue, l'appareil photographique devra comporter un horodateur connecté au système d'enclenchement qui réalisera l'affichage interne de la date et de l'heure au moment de la prise de vue. De tels moyens, particulièrement complexes ne peuvent être envisagés que pour des appareils coûteux.

S'agissant d'appareils jetables, ils sont de plus en plus utilisés comme cadeaux ou objets promotionnels. Certes, le promoteur peut faire passer son message qu'il soit publicitaire, culturel ou social sur le support extérieur de l'appareil, support cartonné ou plastique. Cependant, une fois que la pellicule est terminée, l'appareil est purement et simplement jeté, de sorte que le message disparaît. Pour éviter cet inconvénient, on a déjà proposé d'incorporer dans l'appareil jetable des moyens pour marquer chacune des photographies prise d'une image prédéterminée, ce terme étant utilisé quelle que soit la représentation (logos, sigles, mots, ...). Ainsi, le bénéficiaire du cadeau ou de l'objet promotionnel qu'est l'appareil jetable garde de manière définitive le contenu du message sur chacune des photos développées.

On a déjà proposé dans le document WO 98/00752 un appareil photographique jetable comportant de tels moyens de marquage, qui se présentent sous la forme d'une bande d'un film transparent comportant une ou plusieurs images prédéterminées, fixée devant l'ouverture de l'objectif et venant en contact avec la pellicule contenue à l'intérieur de l'appareil. Ainsi, lors de la prise de vue, il y a impression sur la pellicule à la fois de l'objet se trouvant devant l'objectif et de l'image portée par la bande de film transparent.

Les appareils jetables restent encore d'une qualité photographique moyenne, même si des progrès très sensibles ont été faits depuis leur apparition.

L'un des buts visé par la présente invention est de proposer un appareil photographique jetable comportant des moyens de marquage incorporés et qui soit d'une qualité photographique améliorée, sans augmentation sensible du coût de l'appareil.

Il existe également des appareils photographiques qui ne sont pas jetables mais qui sont très rudimentaires et très bon marché. Leur qualité photographique est également moyenne.

Un autre but de la présente invention est de proposer un appareil photographique de ce type qui comporte des moyens de marquage incorporés et qui soit d'une qualité photographique améliorée, sans augmentation sensible du coût de l'appareil.

Ces buts sont parfaitement atteints par l'appareil de l'invention qui, de manière connue est un appareil photographique ayant une chambre d'exposition, une ouverture pour l'objectif devant lequel une pellicule photographique peut être déplacée ainsi qu'une bande d'un film transparent porteur d'une ou plusieurs images déterminées, ladite bande étant fixée à l'intérieur de la chambre en sorte d'être face à l'objectif et en contact avec la pellicule.

De manière caractéristique, selon l'invention, la bande est elle-même un tronçon d'un film photographique, du type diapositive, sur lequel la ou lesdites images ont été impressionnées lors d'une prise de vue alors qu'elles étaient sur un fond blanc dans des conditions telles que la bande présente un effet filtre.

La diapositive, portant la ou les images prédéterminées, sert à la fois de moyen de marquage et de filtre, sans aucune modification technique de l'appareil, que celui-ci soit jetable ou non.

S'agissant d'un appareil jetable, la ou lesdites images ont été impressionnées sur le tronçon de film photographique du type diapositive, alors qu'elles étaient sur un fond blanc lors d'une prise de vue avec sous-exposition.

De préférence, la sous-exposition en question est de l'ordre d'un demi diaphragme.

S'agissant d'un appareil non jetable, la ou lesdites images ont été impressionnées sur le tronçon de film photographique du type diapositive alors qu'elles étaient sur un fond blanc, avec lumière artificielle, lors d'une prise de vue en exposition moyenne et avec une vitesse d'obturation qui diffère selon les couleurs utilisées pour l'image.

Pour les couleurs franches, la vitesse d'obturation est de 60 millièmes.

Pour les couleurs pastels, la vitesse d'obturation est de 30 millièmes.

La diapositive correspondante donne un fini légèrement teinté, qui correspond à un filtre du type "couleur fumée", comparable au résultat obtenu par un filtre dit de type sky light.

De préférence, le fond blanc pour la prise de vue de la diapositive est une surface blanche mate. Dans ces conditions, sur la photographie développée, il n'y a aucune trace du fond, seule apparaissant l'image prédéterminée.

Avantageusement, la diapositive porteuse de la ou des images prédéterminées ne comporte que la griffe d'enroulement inférieure servant de support de fixation dans la chambre d'exposition.

De préférence, la fixation de la diapositive porteuse de la ou des images prédéterminée est obtenue à l'aide d'un ruban auto-collant double face de faible épaisseur, de l'ordre ou inférieur à 65 micromètres.

La présente invention sera mieux comprise à la lecture de la description qui va être faite d'un exemple préféré de réalisation illustré par le dessin dans lequel :
- la figure 1 est une représentation schématique en coupe d'un appareil photographique jetable à marquage incorporé de l'état antérieur de la technique,
- la figure 2 est une illustration générale d'une prise de vue servant à constituer des diapositives de marquage,
- la figure 3 est une représentation en plan d'un film de diapositives obtenues à l'occasion des prises de vues,
- la figure 4 est une représentation schématique en plan d'une diapositive de marquage,
- la figure 5 est une représentation schématique de côté de la diapositive de la figure 4.

Un appareil photographique jetable 1, à marqueur d'images incorporé, tel que connu par le document WO 98/00752 comprend, dans son boîtier 2, une chambre d'exposition 3 donnant sur une ouverture 4 de l'appareil vers l'extérieur, l'objectif 5 étant interposé entre la chambre 3 et l'ouverture 4. Une pellicule photographique 6 ferme la chambre d'exposition 3, à l'opposé de l'objectif 5. Cette pellicule 6 peut se déplacer depuis une bobine d'alimentation 7 jusqu'à une bobine de réception 8. Une bande 9 d'un film transparent, sur lequel est portée une ou plusieurs images prédéterminées, est fixée sur la périphérie de la chambre 3, venant en contact avec la pellicule 6.

Selon la particularité de la présente invention, s'agissant d'un appareil jetable, la bande 9 n'est pas n'importe quelle bande d'un film transparent mais est spécifiquement un tronçon d'un film photographique, du type diapositive, sur lequel la ou les images prédéterminées à marquer sur les photographies ont été impressionnées alors qu'elles étaient sur un fond blanc lors d'une prise de vue avec sous-exposition.

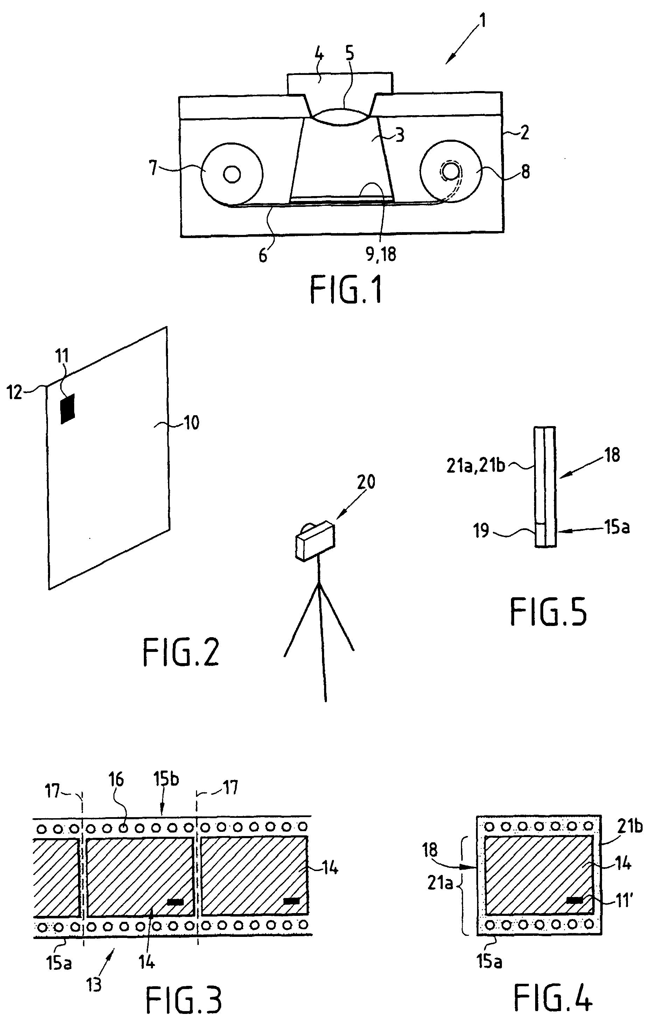

Plus précisément, comme illustré sur la figure 2, on a dans un premier temps disposé sur un panneau ayant une surface blanche de préférence mate une ou plusieurs images prédéterminées que l'on souhaite marquer sur les photographies qui seront tirées et développées à partir de l'appareil jetable de l'invention. Sur le panneau 10 de la figure 2, on a représenté simplement une image 11, sous la forme d'un rectangle noir, situé vers le coin supérieur gauche 12 du panneau 10. A l'aide d'un appareil photographique 20, muni d'une pellicule pour prise de diapositives, on a photographié le panneau 10 de manière à ce qu'il occupe l'ensemble de la prise de vue. Cette photographie a été réalisée avec un réglage en sous-exposition, par rapport à une prise de vue normale. Cette sous-exposition est de l'ordre d'un demi diaphragme.

Par exemple, et de préférence, dans le cas où la prise de vue aurait dû être normalement avec une ouverture du diaphragme de 5,6, la prise de vue a été faite avec un réglage d'ouverture du diaphragme de 8.

Dans le cas où la prise de vue avec un réglage normal aurait dû être avec une ouverture de diaphragme de 8, la prise de vue sous-exposée l'a été avec une ouverture de diaphragme de 11.

On a ainsi réalisé autant de prises de vues que d'appareils jetables à équiper. Le film développé 13 ainsi obtenu est un film photographique comportant de manière centrale la succession des prises de vues 14 et latéralement deux bandes 15a et 15b munies des griffes 16 d'entraînement.

Le film 13 est ensuite découpé de manière à isoler chaque prise de vue 14 par des découpes selon des lignes transversales 17. C'est la diapositive ainsi obtenue qui fait office, conformément à l'invention, de moyen de marquage sur chaque photographie développée à partir de l'appareil jetable.

Pour la fixation de cette diapositive, conformément à la figure 4, on effectue tout d'abord la découpe de la bande latérale 15b, qui est la bande d'entraînement supérieure de la pellicule lorsque l'appareil 1 est en position d'utilisation, cette découpe étant nécessaire compte tenu de l'encombrement intérieur de l'appareil. Par contre, l'autre bande latérale 15a, qui est la bande d'entraînement inférieure, sert de support pour la fixation de la diapositive partiellement découpée 18 sur le montant inférieur de la chambre 3. De préférence, cette fixation est réalisée également selon les deux montants latéraux de ladite chambre 3. Plus particulièrement, dans l'exemple illustré à la figure 5, un adhésif double-face 19 permet d'effectuer cette fixation. Il s'agit de trois bandelettes de faible largeur dont une face est appliquée sur la diapositive 18, respectivement le long de la bande latérale 15a et des deux bandes transversales 21a, 21b, tandis que l'autre face est appliquée sur le chant de la chambre d'exposition 3 de l'appareil 1, respectivement selon le montant inférieur et les deux montants latéraux. La fixation selon les deux montants latéraux est préférable de manière à empêcher la diapositive de se gondoler ou de venir, avec un bord tranchant, frotter sur la pellicule photographique lors du déplacement de celle-ci dans l'appareil.

Le type d'auto-collant double face utilisé de préférence présente une largeur de 3 millimètres et une épaisseur de 25 micromètres. Il est coupé à la longueur voulue soit environ 35 mm pour le montant inférieur et 20 mm pour les deux montants latéraux. Il importe que l'épaisseur du ruban auto-collant double face soit faible, de préférence inférieure ou égale à 65 micromètres. Une épaisseur plus importante augmenterait les risques de frottement entre la diapositive et la pellicule lors du déplacement de celle-ci. De plus, un ruban adhésif auto-collant plus épais risquerait de passer à travers les perforations correspondant aux griffes 16 d'entraînement sur la bande latérale 15a, ce qui aurait pour effet de coller la pellicule et d'empêcher son déroulement.

L'appareil 1 est donc ainsi équipé d'un moyen de marquage approprié de l'image 11, grâce à la représentation 11' qui est faite de cette image sur la diapositive 18, ce moyen de marquage faisant également office de filtre. La prise de vue 14 sur la diapositive 18 est effectivement, du fait de la sous-exposition, légèrement teintée, de sorte que l'on obtient l'équivalent d'un filtre dit de type sky light qui atténue les reflets, accentue le bleu du ciel, renforce les contrastes, sans pour autant modifier les autres paramètres. Ce filtre couvrant toute la surface du fond de la chambre d'exposition pourra supporter la ou les images prédéterminées, que celles-ci soient en noir ou en couleur, à la dimension et à l'emplacement choisis par le promoteur. La représentation 11' de l'image 11 sera fidèlement reproduite, notamment ses couleurs, tant sur la diapositive 18 obtenue par la prise de vue directe que sur toutes les épreuves qui pourront être tirées de la pellicule initiale.

Il est à noter que l'image prédéterminée peut bien sûr consister dans l'application sur le panneau 10 d'une reproduction à plat de ladite image 11 mais également d'un objet en volume, grâce à la profondeur de champ utilisée pour la réalisation de la diapositive 18.

La description qui vient d'être faite concerne un appareil photographique jetable. Cette description est tout-à-fait transposable à un appareil photographique, non jetable, en particulier de conception aussi simplifiée et donc de coût faible. La seule différence est que pour obtenir à la fois le marquage et l'effet filtre tel qu'il est souhaité dans la présente invention, il est nécessaire de changer les conditions de prise de vue pour réaliser l'impression de l'image sur le film photographique, du type diapositive. Plus précisément, cette prise de vue est réalisée avec lumière artificielle, en exposition moyenne et avec une vitesse d'obturation qui diffère selon les couleurs utilisées pour l'image. Cette vitesse d'obturation est par exemple de 60 millièmes lorsque l'image qui doit être impressionnée est de couleur franche, tandis que la vitesse d'obturation est par exemple de 30 millièmes lorsque l'image qui doit impressionnée est de couleur pastel.

En fonction de la présentation intérieure des appareils, il peut être nécessaire de découper non pas la bande latérale 15b mais la bande latérale 15a, c'est-à-dire la bande d'entraînement inférieure de la pellicule, et donc d'utiliser la bande restante 15b pour le fixation de la diapositive.

## Revendications

1. Appareil photographique comprenant d'une part une chambre d'exposition (3) et une ouverture (4) pour l'objectif (5) devant lequel une pellicule photographique peut être déplacée, et d'autre part une bande d'un film transparent porteur d'une ou plusieurs images déterminées, ladite bande étant fixée à l'intérieur de la chambre (3) en sorte d'être face à l'objectif (5) et en contact avec la pellicule (6),caractérisée en ce que la bande est elle-même un tronçon (18) d'un film photographique, du type diapositive, sur lequel la ou lesdites images (11') ont été impressionnées, lors d'une prise de vue, alors qu'elles étaient sur un fond blanc dans des conditions telles que la bande présente un effet filtre.

2. Appareil selon la revendication 1, du type jetable, caractérisé en ce que la ou lesdites images ont été impressionnées lors d'une prise de vue avec sous-exposition.

3. Appareil selon la revendication 2 caractérisé en ce que la sous-exposition est de l'ordre d'un demi diaphragme.

4. Appareil selon la revendication 1 du type non jetable, caractérisé en ce que la ou lesdites images ont été impressionnées lors d'une prise de vue, sous lumière artificielle, avec une exposition moyenne et une vitesse d'obturation qui diffère selon les couleurs utilisées pour l'image.

5. Appareil selon la revendication 4 caractérisé en ce que la vitesse d'obturation est de 60 millièmes pour une image de couleur franche.

6. Appareil selon la revendication 4 caractérisé en ce que la vitesse d'obturation est de 30 millièmes pour une image de couleur pastel.

7. Appareil selon l'une des revendications 1 à 6 caractérisé en ce que le fond blanc pour la prise de vue est une surface blanche mate.

8. Appareil selon l'une des revendications 1 à 7 caractérisé en ce que le tronçon du film diapositif (18) ne comporte que la bande latérale (15a) inférieure, d'enroulement servant de support partiel de fixation dans la chambre d'expostion (3).

9. Appareil selon la revendication 8 caractérisé en ce que la fixation du tronçon de film diapositive (18) est réalisée à l'aide de bandelettes adhésives double face (19, 21) d'épaisseur de l'ordre ou inférieure à 65 micromètres.
